# EUROPEAN PATENT APPLICATION

(11) **EP 1 406 221 A1**
(43) Date of publication of application: **07.04.2004**
(21) Application number: 03005165.0
(22) Date of filing: 07.03.2003
(51) Int. Cl.: G07F 19/00

(54) **Electronic commerce credit processing method and electronic commerce system**

(30) Priority: 03.10.2002 JP 2002290804
(71) Applicant: Hitachi Software Engineering Co., Ltd., Yokohama-shi, Kanagawa 230-0045 (JP)
(72) Inventor: Nagamine, Shigeru, Hitachi Software Engineering Co, Shinagawa-ku, 140-0002 Tokyo (JP); Fukuda, Hideaki, Hitachi Software Engineering Co, Shinagawa-ku, 140-0002 Tokyo (JP); Miyatake, Shuji, Hitachi Software Engineering Co, Shinagawa-ku, 140-0002 Tokyo (JP)
(74) Representative: Liesegang, Roland, Dr.-Ing.

(57) **Abstract**

A method for allowing a credit institution to give credit for the payment of products purchased from a seller in an electronic transaction over a network regardless of whether the seller has a contractual relationship with the credit institution, such that leakage of personal information such as credit card number can be prevented. A purchaser terminal device transmits information about the products and a credit institution selected by the purchaser to a seller device. The seller device creates an object comprising information about the price of the products and seller ID information identifying the seller device, and transmits the object to the purchaser terminal device. The purchaser terminal device transmits personal information about an account for the settlement of the payment, as well as the information about the price and the seller ID information in the object received from the seller device, to a credit processing device of the credit institution selected by the purchaser, where credit processing is carried out.

## Description

### BACKGROUND OF THE INVENTION

### 1. Technical Field

The present invention relates to a method for processing credit transactions through an electronic commerce system in which customers can purchase products or services provided by sellers over a network such as the Internet, and an electronic transaction system.

### 2. Background Art

As the number of users of the Internet increases rapidly, more and more people are conducting electronic transactions over the Internet. This rapid expansion of electronic commerce has created several social problems, including instances of sellers not sending purchased products to customers, or abuse of purchasers' credit card numbers.

In large-scale transactions, there is an established system for concluding a transaction by authenticating the seller and the purchaser individually by different credit institutions using an identical authentication method. However, in the case of small-scale transactions over the Internet involving a great number of anonymous individuals, it would require an incredibly large amount of work to have all of the credit institutions worldwide adopt an identical authentication method and authenticate all of the individuals involved in transactions. Such an idea is not realistic also due to probable differences in opinion among credit institutions.

In Japan, attempts are made to check the sellers by requiring them to register their equipment and transaction sites, or requiring their sites to be authorized as secure sites. These measures, however, are not reassuring enough from the viewpoint of the purchasers. Specifically, according to the current method of individual authentication, the purchaser's personal information, such as bank account number or credit card number, is transmitted to a settlement institution via the seller's equipment or site, before the settlement institution gives credit. This method can effectively protect the sellers and credit institutions from customers with potentially malicious intentions. It is not, however, sufficient for protecting customers from malicious sellers, because the purchaser's personal information, such as credit card number, is made available to the seller via his or her own equipment or site.

A method of authenticating individuals involved in transactions without requiring the purchaser's personal information to be transmitted to the seller's equipment or site is known from JP Patent Publication (Nonexamined Application) No. 2001-217826 (publication 1).

This method does not transmit personal information such as credit card number to a member site, thus eliminating the fear that the personal information might be abused by an ill-intentioned seller.

However, through this system, the price of a purchased product is transmitted from the member site to a credit center, so it is possible for a seller with malicious motives to increase the amount of a purchase illegally, and transmit that amount to the credit center. If this happens, an erroneous amount would be deducted from the purchaser's account. Thus, this known system cannot reliably protect purchasers from malicious sellers.

Furthermore, this system is based on the existence of a contractual relationship between member shops and a credit center, whereby data such as that regarding the member sites' URLs and names is registered in a membership database at the reception server of the credit center in advance. In such a system, when the password or credit card number of the purchaser is encrypted in a encryption program and then transmitted to the credit center without passing through the seller's member site, there is no chance that such personal information would leak to the seller. However, potential customers cannot buy products or services from a non-member seller, because non-members cannot receive credit from the credit center.

### SUMMARY OF THE INVENTION

It is therefore an object of the present invention to provide a method of processing credit transactions in an electronic commerce system, and an electronic commerce system. In the electronic commerce system, when a transaction is conducted over a network such as the Internet, abuse of personal information (such as a credit card number provided for credit-acquiring purposes) can be prevented, and in which credit for the purchase of products or services from a seller can be given by a credit institution, whether or not the seller has a contractual relationship with the credit institution.

In one aspect, the invention provides a method of processing credit in an electronic commerce system comprising a purchaser terminal device used by a purchaser of products, a seller device managed by a seller of products, and a credit processing device managed by a credit institution, wherein, in response to a request from the purchaser to purchase products displayed on the purchaser terminal device by the seller device over a network, the credit processing device carries out credit processing with regard to the purchaser, wherein a commercial transaction is set up between the purchaser and the seller only when the purchaser satisfies necessary requirements for a transaction, the method comprising:
a first step of transmitting information about a credit institution selected by the purchaser, as well as the information about the desired products, from the purchaser terminal device to the seller device providing the products desired by the purchaser;
a second step of creating, on the seller device, an object comprising information about the purchase price for the desired product and seller ID information identifying the seller device, after receiving the information about the desired product and the information about the credit institution;
a third step of transmitting the object, from the seller device to the purchaser terminal device in which the request for purchasing the products was made;
a forth step of transmitting the purchaser's personal information about an account in which the payment of the purchase price of the products is to be settled, and the information about the purchase price and the seller ID information in the object received from the seller device, from the purchaser terminal device to the credit processing device of the credit institution selected by the purchaser;
a fifth step of carrying out credit processing based on these items of information, on the credit processing device; and
a sixth step of transmitting the result of the credit processing, from the credit processing device to the seller device identified by the seller ID information.

In another aspect, the method comprises:
a first step of transmitting information about a credit institution selected by the purchaser, as well as the information about the desired products, from the purchaser terminal device to the seller device providing the products desired by the purchaser;
a second step of creating, on the seller device, an object comprising information about the purchase price for the desired product and seller ID information identifying the seller device, after receiving the information about the desired products and the information about the type of credit as well as the credit institution;
a third step of transmitting the object, from the seller device to the purchaser terminal device in which the request for purchasing the products was made;
a forth step of transmitting the purchaser's personal information about an account in which the payment of the purchase price of the products is to be settled, and the information about the purchase price and the seller ID information in the object received from the seller device, from the purchaser terminal device to the credit processing device of the credit institution selected by the purchaser;
a fifth step of determining if the purchaser is transaction-worthy, on the credit processing device, by comparing the purchase price received from the purchaser terminal device with the maximum payable amount of the purchaser determined by the credit processing device based on the personal information;
a sixth step of transmitting a credit-affirming or denying notice, from the credit processing device to the seller device identified by the seller ID information, depending on the result of the determination; and
a seventh step of transmitting a successful or an unsuccessful transaction notice, from the seller device to the purchaser terminal device, after receiving the credit-affirming or denying notice.

In a preferred embodiment, the second step comprises the step of creating an object comprising a credit communication program for communicating with the credit function of the credit institution selected by the purchaser, in addition to the information about the purchase price of the desired product and the seller ID information identifying the seller device, wherein the forth step comprises the step of transmitting the information about the purchase price and the seller ID information in the object, to the credit processing device of the credit institution selected by the purchaser using the credit communication program.

In another aspect of the invention, the method comprises:
a first step of transmitting information about a credit institution and the type of credit selected by the purchaser, as well as the information about the desired products, from the purchaser terminal device to the seller device providing the products desired by the purchaser;
a second step of creating and storing in a memory means, on the seller device, an object comprising information about the purchase price for the desired product, seller ID information identifying the seller device and transaction ID information for each transaction, after receiving the information about the desired products and the information about the type of credit as well as the credit institution;
a third step of transmitting the object, from the seller device to the purchaser terminal device in which the request for purchasing the products was made;
a forth step of transmitting the purchaser's personal information about an account in which the payment of the purchase price of the products is to be settled, and the information about the purchase price, the seller ID information and the transaction ID information for each transaction in the object received from the seller device, from the purchaser terminal device to the credit processing device of the credit institution selected by the purchaser;
a forth step of transmitting the purchaser's personal information about an account in which the payment of the purchase price of the products is to be settled, and the information about the purchase price and the seller ID information in the object received from the seller device, from the purchaser terminal device to the credit processing device of the credit institution selected by the purchaser;
a sixth step of transmitting a credit-affirming or denying notice to which the transaction ID information is attached, from the credit processing device to the seller device identified by the seller ID information, depending on the result of the determination; and
a seventh step of retrieving and confirming, on the seller device, the relevant transaction content from the memory means based on the transaction ID information, after receiving the credit-affirming or denying notice; and a eighth step of transmitting a successful or an unsuccessful transaction notice, from the seller device to the purchaser terminal device, depending on the result of the confirmation.

In a preferred embodiment, the second step comprises the step of creating an object comprising a credit communication program for communicating with the credit function of the credit institution selected by the purchaser, as well as the information about the purchase price of the desired product, the seller ID information, and the transaction ID information for each transaction,
wherein the forth step comprises the step of transmitting the information about the purchase price, the seller ID information, and the transaction ID information for each transaction in the object, to the credit processing device of the credit institution selected by the purchaser using the credit communication program.

In still another embodiment, the second step comprises the step of creating an object comprising information about the recipient of the purchase price and a credit communication program for communicating with the credit function of the credit institution selected by the purchaser, as well as the information about the purchase price of the desired product, the seller ID information, and the transaction ID information for each transaction,
wherein the forth step of transmitting the information about the purchase price, the seller ID information, and the transaction ID information for each transaction and the information about the payment recipient in the object, to the credit processing device of the credit institution selected by the purchaser using the credit communication program.

In yet another aspect, the invention provides an electronic commerce system comprising a purchaser terminal device used by a purchaser of products, a seller device managed by a seller of products, and a credit processing device managed by a credit institution, wherein, in response to a request from the purchaser to purchase products displayed on the purchaser terminal device by the seller device over a network, the credit processing device carries out credit processing with regard to the purchaser, wherein a commercial transaction is set up between the purchaser and the seller only when the purchaser satisfies necessary requirements for a transaction,
wherein the purchaser terminal device comprises:
a first means for transmitting information about a credit institution selected by the purchaser and information about products desired by the purchaser, to the seller device,
a second means for transmitting the purchaser's personal information about an account in which the payment of the purchase price of the products is to be settled, and the information about the purchase price and seller ID information in an object received from the seller device, to the credit processing device of the credit institution selected by the purchaser,
wherein the seller device comprises:
a third means for creating, based on the information about the desired product and the selected credit institution, the object comprising the information about the purchase price and the seller ID information identifying the seller device, and transmitting the object to the purchaser terminal device, and
wherein the credit processing device comprises:
a fourth means for carrying out credit processing concerning the purchaser based on the personal information received from the purchaser terminal device, and transmitting a credit-affirming or denying notice, depending on the result of the credit processing, to the seller device identified by the seller ID information.

In yet another aspect of the invention, the purchaser terminal device comprises:
a first means for transmitting information about a credit institution selected by the purchaser and information about products desired by the purchaser, to the seller device,
a second means for transmitting the purchaser's personal information about an account in which the payment of the purchase price of the products is to be settled, and the information about the purchase price and seller ID information in an object received from the seller device, to the credit processing device of the credit institution selected by the purchaser,
wherein the seller device comprises:
a third means for creating, based on the information about the desired product and the selected credit institution received from the purchaser terminal device, the object comprising the information about the purchase price and the seller ID information identifying the seller device, and transmitting the object to the purchaser terminal device; and
a fourth means for receiving a credit-affirming or denying notice from the credit processing device and transmitting a successful or an unsuccessful transaction notice to the purchaser terminal device,
wherein the credit processing device comprises:
a fifth means for determining the maximum payable amount of the purchaser based on the personal information received from the purchaser terminal device, comparing the maximum payable amount with the purchase price received from the purchaser terminal device to determine if the purchaser is transaction-worthy, and transmitting a credit-affirming or denying notice, depending on the result of the determination, to the seller device identified by the seller ID information.

In still another embodiment, the third means comprises:
means for creating an object comprising a credit communication program for communicating with the credit function of the credit institution selected by the purchaser, as well as the information about the purchase price of the desired product and the seller ID information identifying the seller device, wherein the second means comprises:
   means for transmitting, by the credit communication program, the information about the purchase price and the seller ID information in the object to the credit processing device of the credit institution selected by the purchaser.

In a further aspect of the invention, the purchaser terminal device comprises:
a first means for transmitting information about a credit institution selected by the purchaser and information about products desired by the purchaser, to the seller device,
a second means for transmitting the purchaser's personal information about an account in which the payment of the purchase price of the products is to be settled, and an object received from the seller device, to the credit processing device of the credit institution selected by the purchaser,
wherein the seller device comprises:
a third means for creating, based on the information about the desired product and the selected credit institution received from the purchaser terminal device, the object comprising the information about the purchase price, the seller ID information identifying the seller device, and transaction ID information for each transaction, storing the object in a memory means, and transmitting the object to the purchaser terminal device; and
a fourth means for receiving a credit-affirming or denying notice from the credit processing device, wherein the credit-affirming or denying notice has the transaction ID information attached thereto, retrieving a transaction content from the memory means based on the received transaction ID information, confirming the transaction content, and transmitting a successful or an unsuccessful transaction notice to the purchaser terminal device,
wherein the credit processing device comprises:
a fifth means for determining the maximum payable amount of the purchaser based on the personal information received from the purchaser terminal device, comparing the maximum payable amount with the purchase price received from the purchaser terminal device to determine if the purchaser is transaction-worthy, and transmitting a credit-affirming or denying notice with the transaction ID information attached thereto, depending on the result of the determination, to the seller device identified by the seller ID information.

In another embodiment of the invention, the third means comprises: means for creating an object comprising a credit communication program for communicating with the credit function of the credit institution selected by the purchaser, as well as the information about the purchase price of the desired product, the seller ID information identifying the seller device, and the transaction ID information for each transaction, wherein the second means comprises:
means for transmitting, by the credit communication program, the information about the purchase price, the seller ID information, and the transaction ID information for each transaction in the object to the credit processing device of the credit institution selected by the purchaser.

In yet another embodiment, the third means comprises:
means for creating an object comprising information about the recipient of the payment for the products and a credit communication program for communicating with the credit function of the credit institution selected by the purchaser, as well as the information about the purchase price of the desired products, the seller ID information identifying the seller device, and the transaction ID information for each transaction, wherein the second means comprises:
   means for transmitting, by the credit communication program, the information about the purchase price, the seller ID information, the transaction information for each transaction, and the recipient information in the object to the credit processing device of the credit institution selected by the purchaser.

### BRIEF DESCRIPTION OF THE DRAWINGS

Fig. 1 shows a basic system configuration of the electronic commerce system according to the invention.
Fig. 2 shows a sequence chart illustrating the procedure from the selection of products to the completion of the credit processing in the system of Fig. 1.
Fig. 3 shows an example of a commercial transaction involving a credit institution selected by the seller.
Fig. 4 shows an electronic commerce system according to an embodiment of this invention.
Fig. 5 shows a sequence chart illustrating the procedure from the selection of products to the completion of the credit processing in the configuration of Fig. 4.
Fig. 6 shows a sequence chart continuing from Fig. 5.
Fig. 7 shows an example of a payment method selection window displayed on a WWW browser on the purchaser terminal device.
Fig. 8 shows the content of a table of credit functions provided by different credit institutions.
Fig. 9 shows an example of the window for selecting the credit function provided by a credit institution.
Fig. 10 shows an example of a transaction content block created by a credit-facilitating processing unit of the seller device.
Fig. 11 shows an example of the content of a transaction object created by the credit-facilitating processing unit of the seller device.
Fig. 12 shows an example of the window for confirming the content of credit that is displayed by the purchaser terminal device.
Fig. 13 shows an example of the window for finally confirming the content of credit that is displayed by the purchaser terminal device.
Fig. 14 shows a flowchart of the process of creating a transaction object created by the credit-facilitating processing unit of the seller device.
Fig. 15 shows a flowchart of the process of giving credit by the credit processing device of a credit institution.
Fig. 16 shows a flowchart of the process that is performed by the credit-facilitating processing unit of the seller device upon reception of a credit-affirming notice.

### DESCRIPTION OF THE INVENTION

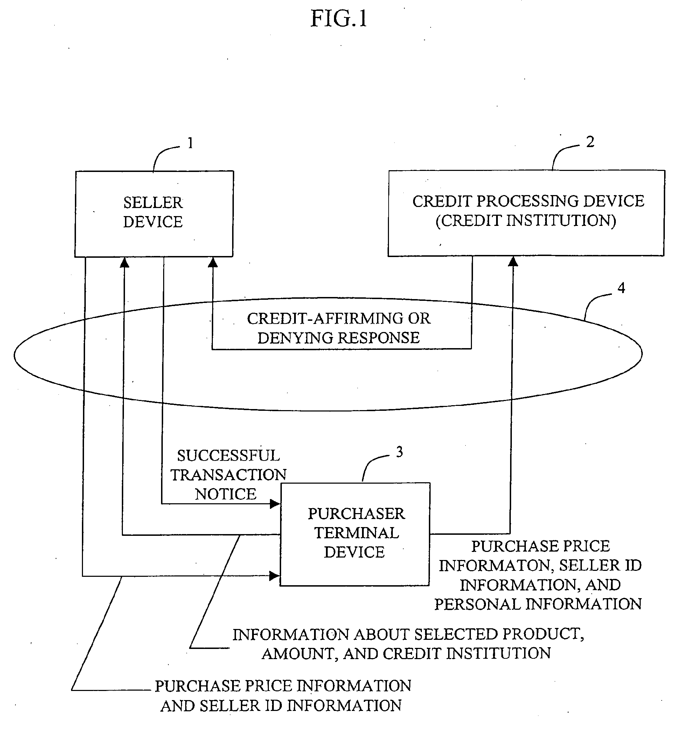

Fig. 1 shows the basic configuration of an electronic commerce system according to the invention. The system comprises a seller device 1 providing products and services, a credit processing device 2 of a credit institution for processing credit transactions, a purchaser terminal device 3 for purchasing or receiving products or services, and the Internet 4 allowing information to be exchanged among the individual devices.

The purchaser terminal device 3 is made up of an information terminal, such as a personal computer a mobile phone having a WWW browser.

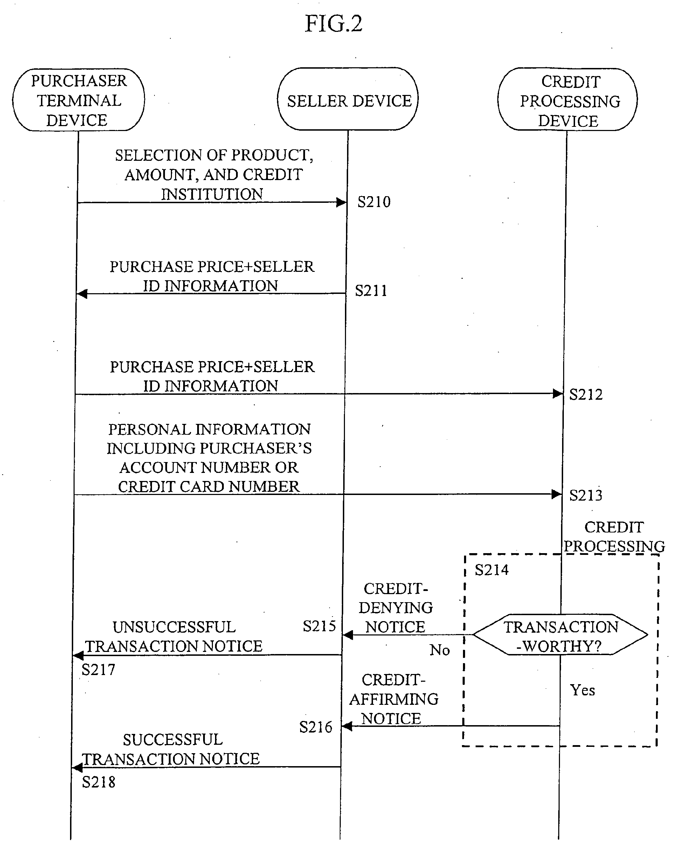

Fig. 2 shows a sequence chart in the above system, illustrating the procedure from the selection of products by the purchaser to the completion of credit processing via the credit processing device 2 at a bank or credit company.

A potential purchaser accesses the seller device 1 from the purchaser terminal device via the Internet 4. He or she then selects information about products (including the product name and the amount) he or she wants to buy on products selection window displayed on the WWW browser of the purchaser terminal device 3. The purchaser further proceeds to select the credit processing device 2 from one of a plurality of banks or credit companies with which the purchaser already has a contractual relationship. The purchaser terminal device 3 then transmits the information about the selected product and credit institution to the seller device 1 via the Internet 4 (step S210).

Upon reception of the information about the products and credit institution selected by the purchaser, the seller device 1 creates a transaction object 32. The transaction object includes information about the purchase price (total amount including consumption tax and shipping and handling fees) of the products selected by the purchaser, and seller ID information identifying the seller device 1. The seller device 1 then transmits the transaction object 32 back to the purchaser terminal device 3 from which the request for purchase has been made (step S211).

The seller ID information includes the URL of the seller device 1, for example, on the network. To the transaction object is added a transaction ID number for identifying the particular transaction when the seller device 1 has received a credit-affirming notice from the credit processing device 2. Information about the recipient of the payment for the products (such as the bank account number to which money should be transferred) is also added to the transaction object for the settlement after the credit-provision processes.

In step S212, the purchaser terminal device 3 requesting the purchase of the products transmits the purchase price and the seller ID information in the transaction object received from the seller device 1 to the credit processing device 2 of the credit institution selected by the purchaser. In step S213, the purchaser inputs personal information (such as bank account number or credit card number) about the account in which settlement of the payment should be made. The purchaser terminal device 3 transmits the personal information to the credit processing device 2 of the credit institution of the purchaser's choice.

In step S214, based on the personal information such as the credit card number received from the purchaser terminal device, the credit processing device 2 of the credit institution determines if the purchaser is transaction-worthy by comparing information about the purchaser's maximum payable credit (or balance in his or her account) stored in an external memory device (not shown) with the purchase price. In steps S215 and S216, the credit processing device 2 connects to the seller device 1 identified by the seller ID information via the Internet 4 and transmits either a credit-affirming or denying notice, depending on the outcome of the judgment in step S214.

Upon reception of either a credit-affirming or denying notice, the seller device 1 transmits a successful or an unsuccessful transaction notice to the purchaser terminal device 3 (steps S217 and S218).

Thus, in accordance with the invention, after selecting the products, the purchaser terminal device 3 receives the information about the purchase price and seller ID information from the seller device 1. The purchaser terminal device 3 then adds personal information including the purchaser's credit card number or bank account number to the received information, and transmits the combined information to the credit processing device 2, thereby requesting the credit processing device 2 to carry out credit processing.

In this case, the credit processing device 2 of the credit institution where credit processing is to be carried out is selected by the purchaser. Accordingly, the relationship between the seller device 1 and the credit processing device 2 varies depending on which seller and which credit institution are selected by the purchaser, so that there is no need for a prior contractual relationship between the seller device 1 and the credit processing device 2.

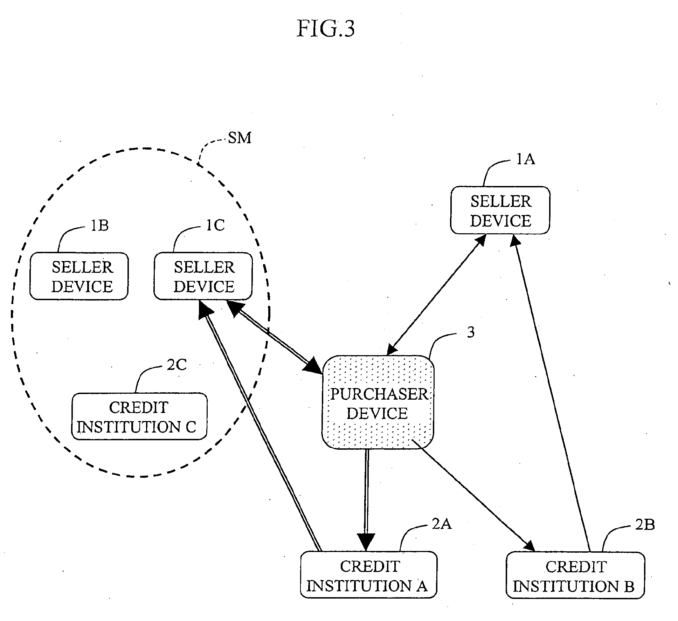

Accordingly, as shown in Fig. 3, in an environment where multiple credit institutions 2A to 2C and multiple seller devices 1A to 1C exist for a single purchaser terminal device 3, the purchaser can ask for credit from the credit institution 2B for the purchase price of products provided by the seller device 1A, and conclude a transaction with the seller device 1A if the outcome of the credit evaluation by the credit institution 2B is positive. Alternatively, the purchaser can make a purchase via the seller device 1C in a shopping mall SM, ask for credit from the credit institution 2A located outside the shopping mall SM for the purchase price, and conclude a transaction with the seller device 1C if the credit institution 2A's credit evaluation is positive. This can be done without any limitations imposed by the credit institution 2C in the shopping mall SM.

In the above-mentioned system disclosed in JP Patent Publication (Unexamined Application) No. 2001-217826, a plurality of seller sites and a plurality of purchaser terminals are connected to a single credit institution. In contrast, the system of the invention can include a number n (n≥2) of credit institutions, a number m (m≥2) of seller devices, and a number p (p≥2) of purchaser terminal devices. Thus, through the present invention, the relationship between a seller device and a credit institution (credit processing device) can be varied by the purchaser, so that there is no need for a prior contractual relationship between a particular seller device and a particular credit institution.

Furthermore, since the purchaser is not required to transmit his or her personal information such as credit card number to the seller device, there is no chance of its being abused. While the purchaser transmits the information about purchase price to the credit processing device 2, he or she is not required to let the credit processing device 2 know about the nature of the purchased product, such as its name. Thus, the purchaser's privacy can be insured.

In the following, the invention will be described by way of embodiments.

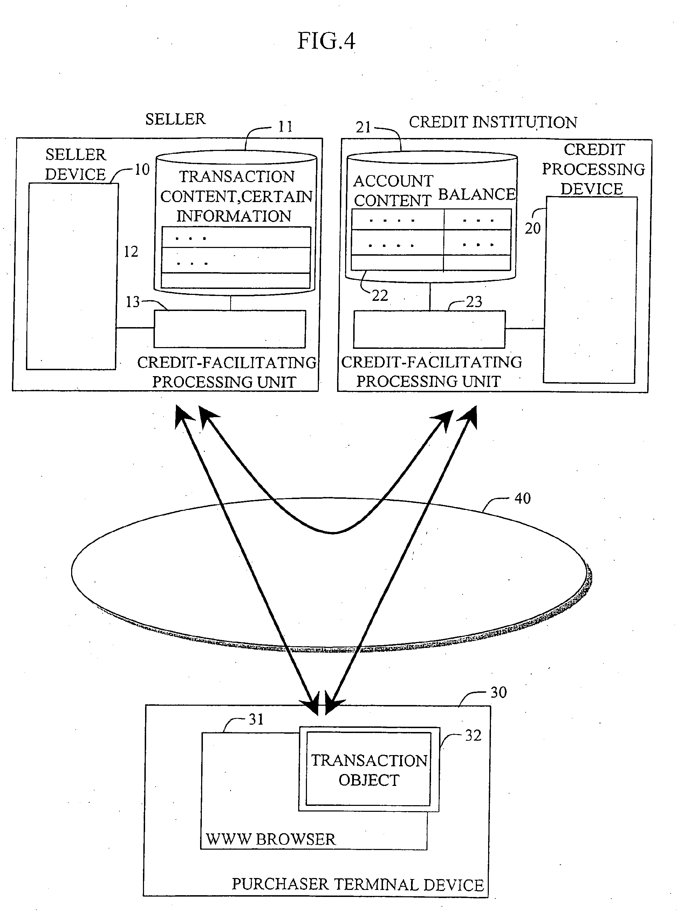

Fig. 4 shows an electronic commerce system according to an embodiment of the invention.

The system comprises a seller device 10 managed by a seller of products, a credit processing device 20 managed by a credit institution, a purchaser terminal device 30 used by a potential customer, and the Internet 40. The customer can see the products available from the seller on the purchaser terminal device 30. When the customer makes a request for purchasing products from the seller, the request is sent to the credit processing device 20 of the credit institution. The credit processing device 20 carries out credit processing regarding the purchase price of the products purchased by the purchaser, and allows the transaction between the purchase and the seller to proceed only when the purchaser's credit balance satisfies certain requirements.

The seller device 10 includes a credit-facilitating processing unit 13 for facilitating credit processing between the seller device 10 and the credit processing device 20 of the credit institution, and a memory device 11 for storing a transaction content file 12 for unequivocally specifying the content of a transaction with the purchaser.

The credit processing device 20 of the credit institution includes an external memory device 21 for storing an account file 22 indicating the balance in the purchaser's account (or an upper credit limit), and a credit-facilitating processing unit 23 for facilitating credit processing with the credit-facilitating processing unit 13 of the seller device 10.

The credit-facilitating processing units 13 and 23 attached to the seller device 10 and the credit processing device 20, respectively, are provided to facilitate the existing seller device 10 and the credit processing device 20 in carrying out the credit processing unique to the invention, which is performed in the background of the seller device 10 and the credit processing device 20.

The purchaser terminal device 30 includes a WWW browser 31 allowing the customer to view a variety of products available from the seller over the Internet 40. The customer selects a product or some products from a products selection window provided by the seller device 10, and further selects a credit institution. The purchaser terminal device 30 then acquires a transaction object 32 from the credit-facilitating processing unit 13 of the seller device 10 and opens it on (plugs it into) the WWW browser 31.

While in Fig. 4, there is one each of the seller device 10, the credit processing device 20, and the purchaser terminal device 30 for ease of understanding, the system of the invention may include more than one of each device.

The necessary credit information such as the payable account number or the balance (or other information indicating an upper credit limit) stored in the external memory device 21 is well known and is therefore not described in detail.

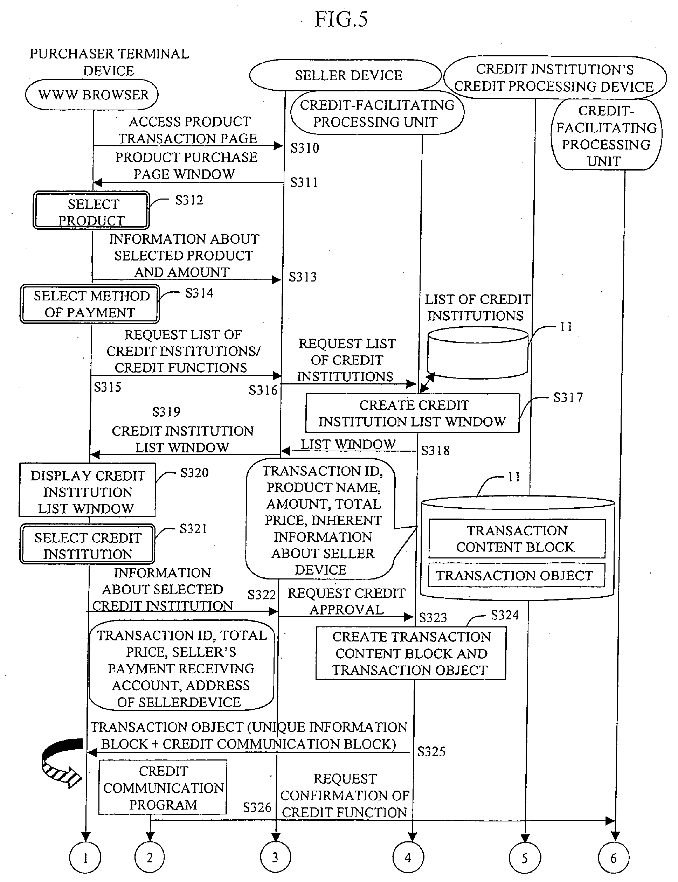

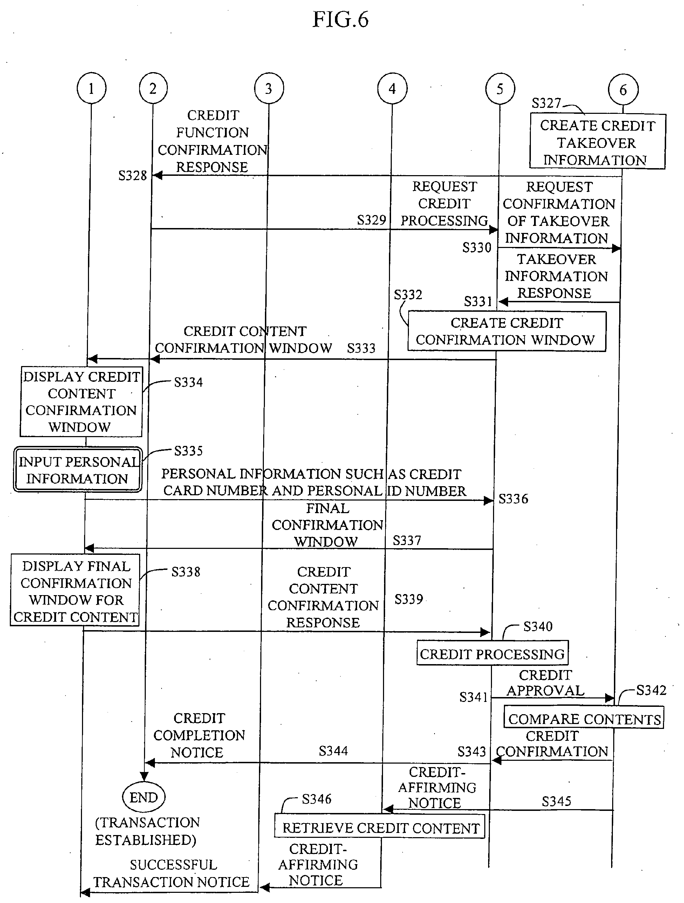

Figs. 5 and 6 show the sequence of events starting from the selection of products by the purchaser to the completion of credit processing by a credit institution such as a bank or a credit company.

In the following, this sequence will be described by referring to Figs. 5 and 6.
(1) The purchaser accesses the web site of the seller device 10 using the WWW browser 31 of the purchaser terminal device 30 (in step S310) and opens a product purchase window on the browser.
(2) The purchaser selects a product and its amount from a group of products displayed in the product purchase window, as well as the method of payment (steps S312 and S314).

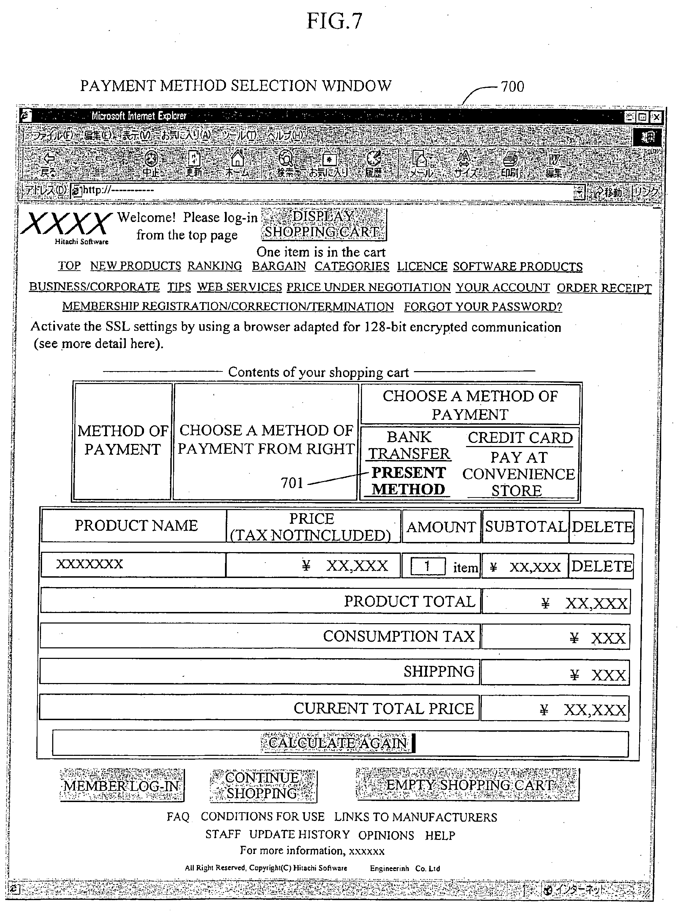

Fig. 7 shows an example of a payment method selection window 700 where the purchaser chooses a method of payment after selecting products. A selection column 701 shows the choices of "BANK TRANSFER," "CREDIT CARD," "CONVENIENCE STORE," and "PRESENT METHOD." Below the payment method selection column 701 is shown a list of the names of the products selected by the purchaser thus far, their prices, numbers, their subtotal, product total, consumption tax, shipping, and the total price. Prior to the selection of the payment method, the selected product information is transmitted to the credit-facilitating processing unit 13 where the total and other numbers are calculated. The results of the calculation are received by the purchaser terminal device and displayed thereon as shown in Fig. 7. In the present invention, the products and the payment method may be selected in the same window or in different windows. In the example of Fig. 5, the products and the payment method are selected in different windows.

The methods of payment, such as by bank transfer, using a credit card, and payment at a convenience store, are the conventional ones used by the seller device 10, and are therefore not described in detail.

The "PRESENT METHOD" button indicates the payment method based on the credit processing method of the invention.

When the purchaser selects the "PRESENT METHOD" button, the WWW browser 31 on the purchaser terminal device 30 transmits a request for a list of credit institutions to the seller device 10 (step S315).

Upon reception of the request, the seller device 10 in turn requests the list from the credit-facilitating processing unit 13 (step S316).

The credit-facilitating processing unit 13 then reads a list of credit institutions from the memory device 11 and generates a credit institution table window (S317), and transfers it to the seller device 10 (step S318). The seller device 10 then transmits the credit institution table window to the WWW browser 31 on the purchaser terminal device 30 (step S319).

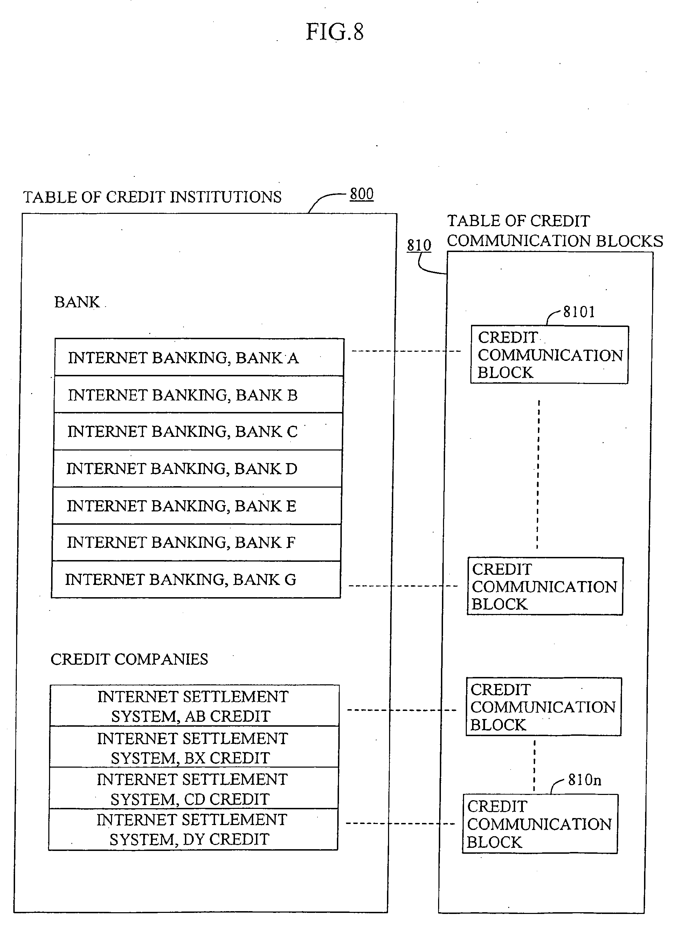

Fig. 8 shows an example of a credit institution table 800 that is stored in the memory device 11 in advance. The table shows the credit functions of the banks and those of the credit companies separately. In the bank list, the credit functions of the individual banks are indicated as, for example, "Internet banking, Bank A." In the credit company list, the credit functions of the individual credit companies are indicated as, for example, "Internet settlement system, AB Credit."

The memory device 11 also stores a credit communication block table 810 having credit communication blocks 8101 to 810n for credit-related communication with individual credit functions, as will be described later.

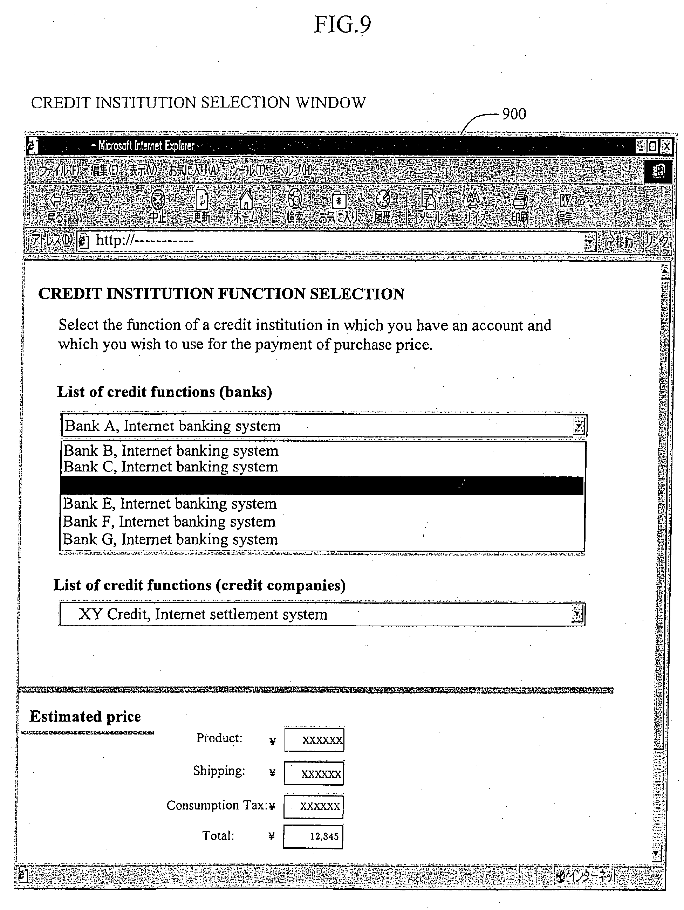

After receiving information from the window showing the list of credit institutions, the WWW browser 31 displays a credit institution selection window 900 on the display unit of the purchaser terminal device 30, as shown in Fig. 9 (step S320).

In the example of Fig. 9, the credit functions of a plurality of banks and credit companies are listed, so that the purchaser can select the credit function of a desired credit institution by using a mouse, for example.

While Fig. 9 shows the banks and the credit companies grouped separately, where in each group the purchaser can pull down the selections, the banks and credit companies may be displayed in a single list. Alternatively, the list may be adapted such that the selection can be made by narrowing down alternatives based on the name of an institution or its location. Any other method of selection may be used, as long as it allows the purchaser to eventually choose one of the credit institutions.

From the credit functions of the credit institutions that are displayed, the purchaser selects a credit institution with which he or she has a contract (i.e., the existence of a bank account or a credit card payment agreement). If the purchaser has a contract with more than one credit institution, one of them is selected (step S321).

The WWW browser 31 on the purchaser terminal device 30 transmits the selection information about the credit institution of his or her choice to the seller device 10 (step S322).

Upon reception of the selection information, the seller device 10 transmits a request for credit approval to the credit-facilitating processing unit 13 (step S323). Thereafter the seller device 10 leaves a series of steps to be taken for credit processing to the credit-facilitating processing unit 23, until it receives a credit-affirming or denying notice in step S347, as will be described later.

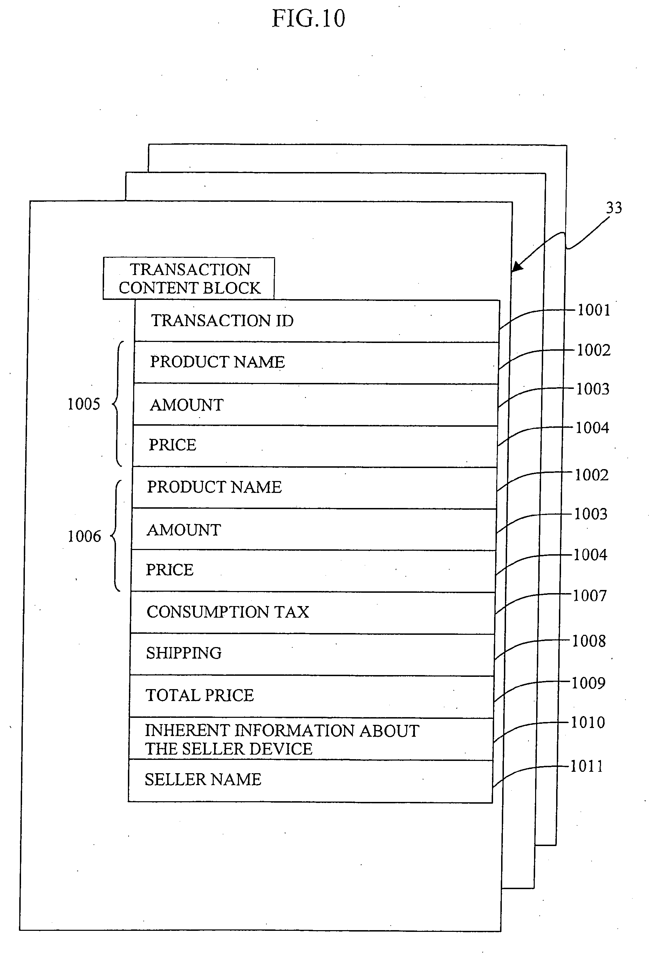

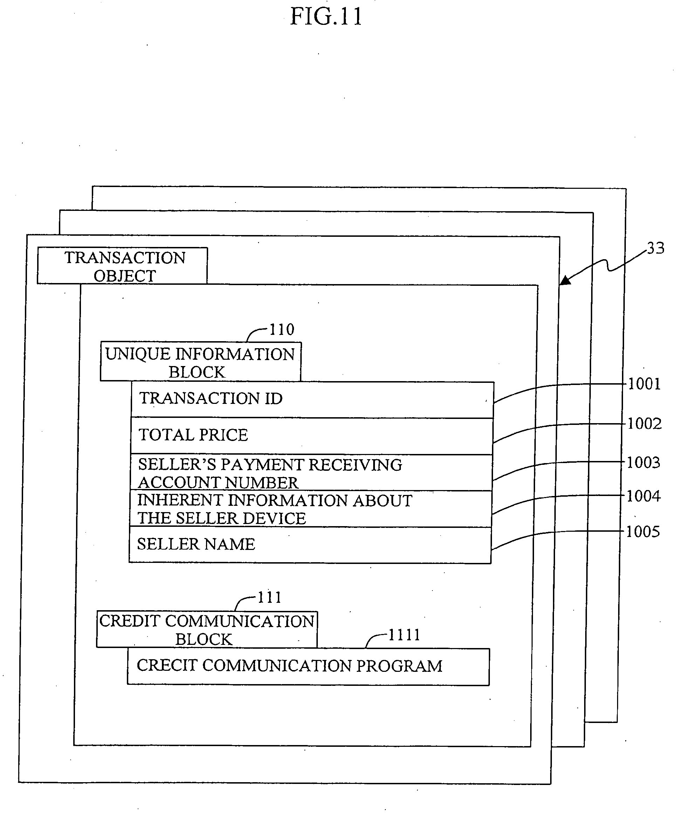

In response to the request for credit approval, the credit-facilitating processing unit 13 creates a transaction content block 33 (see Fig. 10) and a transaction object 32 (see Fig. 11) (step S324), and stores them in the memory device 11.

The transaction content block 33 contains information indicating the details of transaction involving the products purchased by the purchaser. As shown in Fig. 10, it includes a transaction ID information 1001 that is automatically generated for each transaction by a purchaser. It also includes a plurality of items of purchased product information 1005 and 1006, each consisting of a product name 1002, an amount 1003, and a price 1004. The transaction content block 33 further includes a consumption tax 1007, a shipping fee 1008, a total amount (to be paid by the purchaser) 1009, unique information 1010 identifying the seller device, and a seller name 1011.

The inherent information 1010 about the seller device 10 concerns the URL of the device, for example, enabling the identification of the credit-facilitating processing unit 13 of the seller device 10 on the network.

Referring to Fig. 11, the transaction object 32 includes a unique information block 110 necessary for the credit processing regarding the purchased product, and a credit communication block 111 for communicating credit processing-related information with the credit institution selected by the purchaser. The unique information block 110 includes a transaction ID 1101, a total price 1102, a seller's payment-receiving account number 1103, unique information 1104 about the seller device 10, and a seller name 1105. The transaction ID 1101, total amount 1102, inherent information 1104 about the seller device 10, and seller name 1105 are identical to the transaction ID 1001, total amount 1009, inherent information 1010 about the seller device, and seller name 1011 of Fig. 10. The seller's payment-receiving account number 1103 is stored in advance in a specific storage region of the memory device 11.

The credit communication block 111 consists of a credit communication program 1111 for communicating credit processing-related information with the credit institution selected by the purchaser. The credit communication program 1111 is unique to each credit institution, in which at least information for calling up the credit-facilitating processing unit 23 of a corresponding credit institution is set.

The credit-facilitating processing unit 13 transmits the created transaction object 32 to the WWW browser 31 on the purchaser terminal device 30, where the transaction object 32 is expanded (step S325).

Based on the information directly calling for the credit-facilitating processing unit 23 of the credit institution, the credit communication program 1111 in the transaction object 32 expanded on the WWW browser 31 passes the unique information block 110 to the credit-facilitating processing unit 23 of the credit institution, and transmits a request for the confirmation of the availability of the credit function of the credit institution (step S326) can be known.

The credit function of the credit institution is not available when, for example, the credit institution is not providing 24-hour services. In the following description, it is assumed that the credit institution is capable of responding to the credit request on an around-the-clock basis.

The credit-facilitating processing unit 23 of the credit institution stores the unique information block 110 received from the credit communication program 1111 in the external memory device 21 as credit takeover information (step S327).

The credit-facilitating processing unit 23 then transmits a credit function confirmation response to the credit communication program 1111, indicating that the credit processing device 20 is available (step S328).

The credit communication program 1111 by itself or through the WWW browser 31 calls up the credit processing device 20, together with information indicating that the credit transaction utilizes the credit-facilitating processing unit 23, thus requesting the use of the credit processing device 20. Alternatively, the credit communication program 1111 receives an address in step S328, on the assumption that the credit-facilitating processing unit 23 will be utilized by the credit processing device 20, and then the program accesses the address so that a request for initiating the use of the credit processing device 20 can be made (step S329).

The credit processing device 20, upon detection of the use of the credit-facilitating processing unit 23, requests takeover information about credit processing from the credit-facilitating processing unit 23 (step S330).

The credit-facilitating processing unit 23 transfers the credit takeover information stored in the external memory device 21 to the credit processing device 20 (step S331).

The credit processing device 20 then generates a credit content confirmation window, expands each item of the credit takeover information (step S332), and transmits them to the WWW browser 31 on the purchaser terminal device via the credit communication program 1111 (step S333).

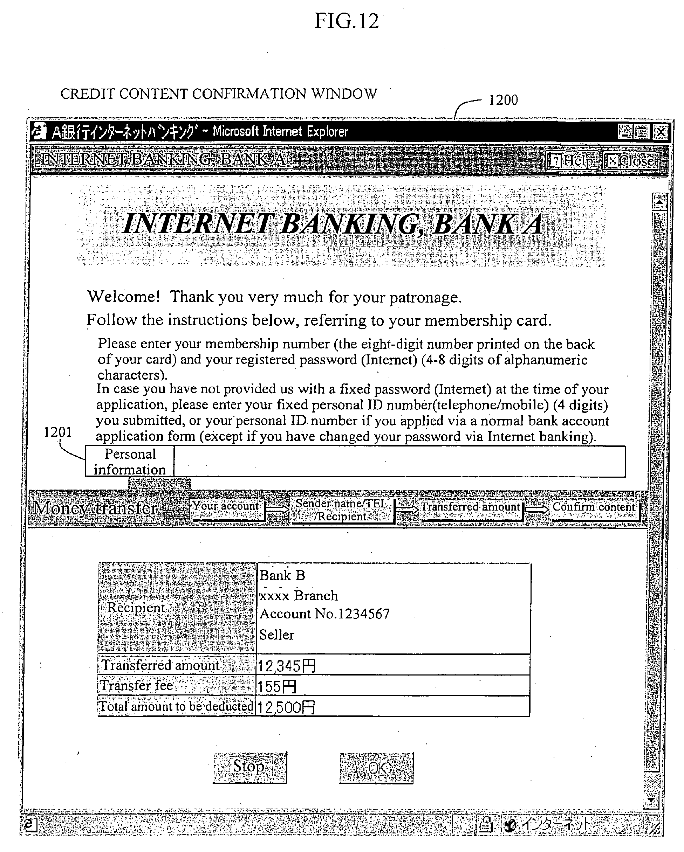

The WWW browser 31 then displays a credit content confirmation window 1200, as shown in Fig. 12 (step S334).

The window displays the credit content to be confirmed, including information about the recipient of the transferred money for a purchased product, the amount to be transferred, transfer fee, and the total amount to be deducted.

The purchaser enters on the credit content confirmation window the required personal information, such as his or her bank account number, personal identification numbers, credit card number, and/or membership number of his or her payment account (step S335). The information is then transmitted to the credit processing device 20, thus making a request for credit confirmation (step S336).

In a case involving a bank, for example, the credit processing device 20 corresponds to the Internet banking system services provided by that bank. Accordingly, the takeover information handed over in step S330 includes the name of the seller, the account number (as well as the name of the bank and the type of account) of the bank to which the payment should be transferred, and the total amount (transfer amount). The confirmation of credit refers to the process of inputting information such as the purchaser's bank account number, telephone number, and personal identification number, and carrying out a transfer of money to the seller's account or making a reservation therefor. On the other hand, when a credit institution is a credit company, the takeover information handed over in step S330 includes the name of the affiliated seller, and the amount of money to be given on credit. In this case, the confirmation of credit refers to entering identification information such as the purchaser's credit card number, expiry date, and personal identification number, and carrying out credit processing.

In the credit content confirmation window 1200 of Fig. 12, the purchaser enters his or her personal information in a personal information input column 1201. This includes bank account number, telephone number, and personal identification number, or his credit card number, expiry date, and personal identification number.

The credit processing device 20 then generates a final confirmation window 1300 for the confirmation of the credit content, and transmits it to the WWW browser 31 where it is displayed (steps S337, S338).

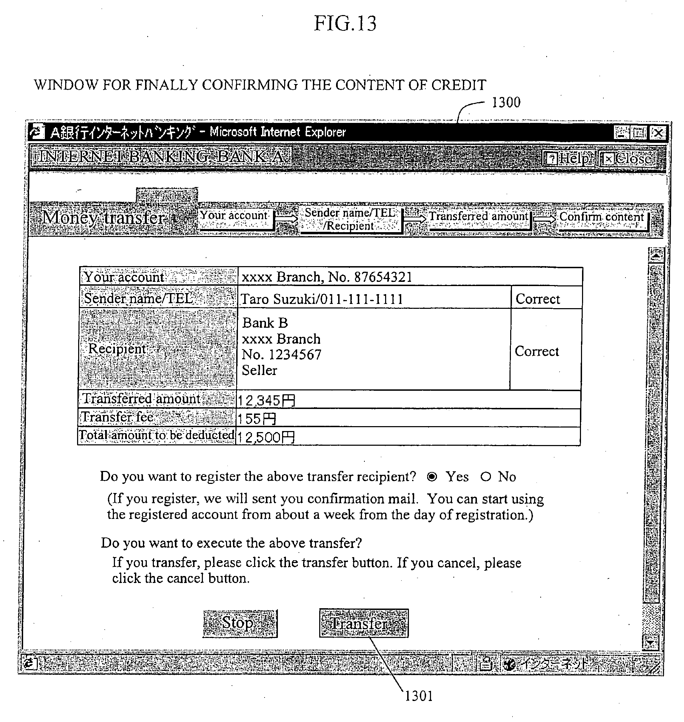

The purchaser can then confirm the credit content displayed in the final confirmation window 1300, as shown in Fig. 13.

As the purchaser confirms the credit content and carries out a confirmation response operation, such as by clicking a "Transfer" button 1301 in the example of Fig. 13, the WWW browser 31 transmits the confirmation response to the credit processing device 20 (step S339). The transfer herein includes a transfer reservation with a designated transfer date, as well as an ordinary money transfer. In the case of a credit company, this corresponds to an approval for extension of credit.

The credit processing device 20 then acquires the purchaser's credit balance from the memory device 21 based on the personal information (including the bank account or credit card number), compares it with the purchase price, and determines whether the transaction is feasible (step S340).

If the transaction is deemed feasible, the credit processing device 20 transmits a credit-affirming notice to the credit-facilitating processing unit, while adding unique information such as a transaction ID and the amount of credit (total amount) thereto (step S341).

The credit-facilitating processing unit 23 compares the credit-approved content with the credit takeover information stored in the external memory device 21, thus identifying the transaction ID of the credit-approved content (step S342).

After the transaction ID for which the credit results have been returned is clarified, the credit-facilitating processing unit 23 sends a credit result confirmation response to the credit processing device 20 (step S343).

After determining that the credit has been confirmed by the credit-facilitating processing unit 23, the credit processing device 20 transmits a credit completion notice to the credit communication program 1111 of the purchaser terminal device 30 (step S344).

Further, the credit-facilitating processing unit 23 passes the unique information to the credit-facilitating processing unit 13 of the seller device 10 identified by its inherent information in the unique information identified by the transaction ID (step S345).

Based on the received unique information, the credit-facilitating processing unit 13 searches the transaction content stored in the memory device 12 for transaction content for which credit was approved (step S346).

Upon the granting of credit, the credit-facilitating processing unit 13 further transmits a credit-affirming notice to the seller device 10 in response to the request (step S323) for credit approval (step S347).

Upon reception of the credit-affirming notice, the seller unit 10 transmits an established transaction notifying window for the established transaction to the WWW browser 31 on the purchaser terminal device 30 where the window is displayed, thus completing the transaction (step S348).

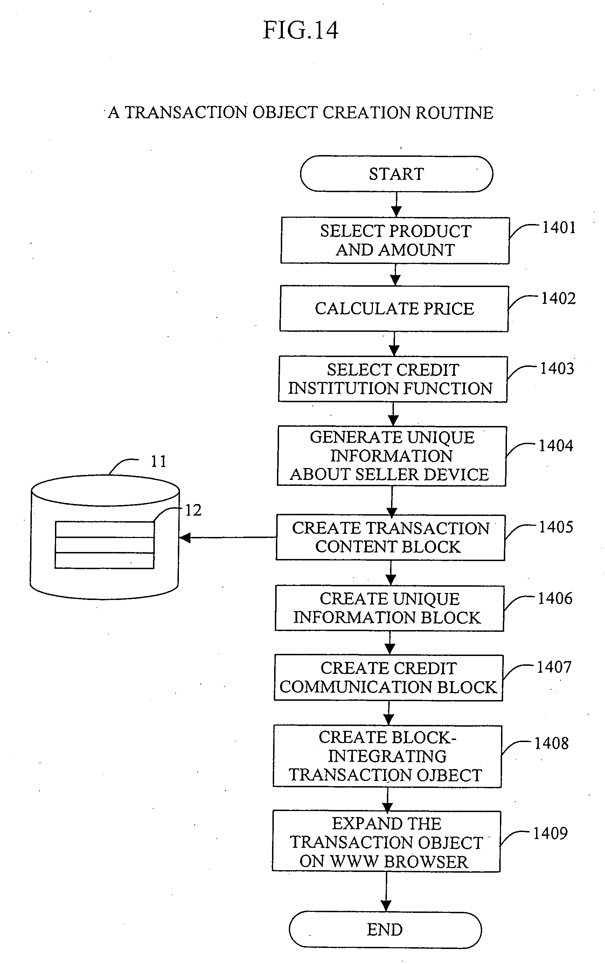

Fig. 14 shows a flowchart of the process of creating a transaction object in the credit-facilitating processing unit 13 of the seller device 10.

The credit-facilitating processing unit 13 of the seller device 10 confirms the name and amount of the relevant product or service based on the purchaser's product selection operation (step 1401), calculates the total price (step 1402), accepts the selection of the credit function of a credit institution (step 1403), and creates a block of unique information unique to the seller device 10, such as that regarding the transaction number, in response to the present transaction (step 1404).

As shown in Fig. 10, the transaction content block stores a transaction ID, product name, amount, total price, inherent information about the seller device, and the name of the seller. The transaction content block is stored in a transaction content file 12 in the memory device 11 (step 1405).

Further, a unique information block is created, which stores, as shown in Fig. 11, a transaction ID, total price, seller's payment-receiving account number (as well as the name of the bank and the type of the account), information for accessing the credit-facilitating processing unit 13 of the seller device, and the name of the seller (step 1406).

Further, a credit communication block is created (step 1407), which stores a credit communication program for communicating information necessary for credit processing with the credit-facilitating processing unit 23 identified by the credit institution selected by the purchaser.

Next, the transaction content block, the unique information block, and the credit communication block are integrated into a transaction object of a transmittable format (step 1408).

The integrated transaction object is then transmitted to the WWW browser 31 of the purchaser terminal device 30 where it is expanded (step 1409).

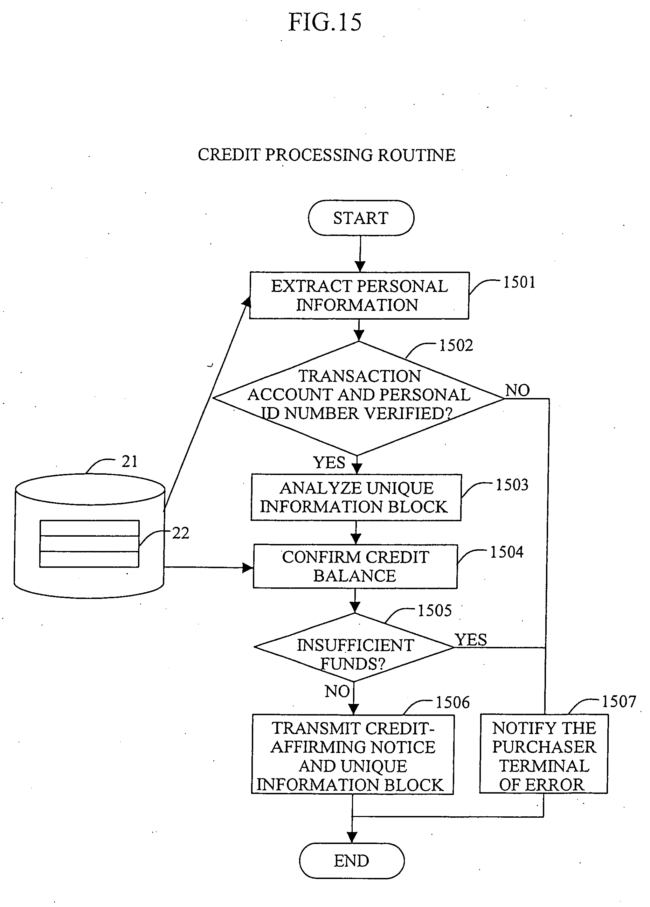

Fig. 15 shows a flowchart of the credit processing by the credit processing device 20.

Upon reception of the credit content confirmation response from the WWW browser 31 of the purchaser terminal device 30 (in step S339 of Fig. 6), the credit processing device 20 extracts the purchaser's personal information such as bank account number, and personal identification number, or credit card number and expiry date (step 1501). Based on the personal information, the credit processing device 20 retrieves an account file 22 in the memory device 21 and authenticates the personal information by checking to see if the account exists and the personal identification number is correct (step 1502).

Once the authentication has been successfully completed, the unique information block taken over from the credit-facilitating processing unit 23 is analyzed in step S340 of Fig. 6, and the total amount of money in the block is extracted (steps 1503, 1504). The total is compared with the credit balance of the purchaser identified by the personal information to determine if there are sufficient funds in the account (or if the maximum upper credit has not been exceeded) (step 1505). If the funds are insufficient, an error notice is transmitted to the purchaser terminal device 30, thus notifying the purchaser that the transaction cannot proceed (step 1507).

If the purchaser has sufficient funds, the unique information block and a credit-affirming notice are returned to the credit-facilitating processing unit 23 (step 1506).

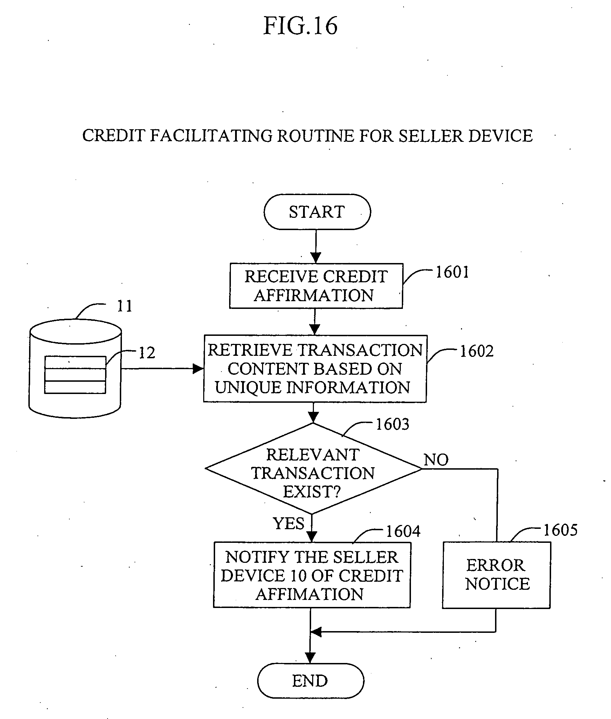

Fig. 16 shows a flowchart of the process performed by the credit-facilitating processing unit 13 at the seller device 10 upon reception of the credit-affirming notice from the credit processing device 20 (step S347 of Fig. 6).

In step 1601, upon reception of the credit-affirming notice from the credit processing device 20 (step S347 of Fig. 6), the credit-facilitating processing unit 13 at the seller device 10 retrieves a corresponding transaction content block from the transaction content file 12 based on the transaction ID in the unique information block that has been received together with the credit-affirming notice (step 1602).

If the transaction content block 110 corresponding to the transaction ID of the unique information block does not exist in the transaction content file 12, an error notice is sent to the seller device 10 (step 1605).

If the transaction content block 110 corresponding to the transaction ID of the unique information block exists in the transaction content file 12, a. credit-affirming notice is sent to the seller device 10 (step 1604).

Thus, in accordance with the present embodiment, personal information such as the purchaser's bank account number or credit card number is not provided to the seller in an electronic commerce transaction over a network such as the Internet. As a result, the chances of the seller abusing the personal information can be eliminated.

As credit institutions such as banks or a credit companies are not provided with information about the names of products purchased by the purchaser, the purchaser's privacy can be effectively protected.

Furthermore, because the purchaser can select a credit institution with which he or she has a contract such as one for Internet banking services via the system provided by the seller, he or she can have the bank process credit, such as a money transfer, according to the contract. The purchaser can also protect himself or herself by scheduling a money transfer, so that he or she can cancel the transfer if the products do not arrive by a designated date.

As the seller does not receive personal information relating to settlement, such as that regarding the purchaser's bank account number or credit card number or the card's expiry date, the seller can demonstrate his or her lack of malice against potential purchasers. As a result, the potential purchasers can feel secure and the number of purchasers can be expected to increase.

Moreover, less burden is placed on the credit institution because it can keep using the conventional personal identification means and the credit balance inquiry system.

In the above description of the embodiments, settlement processes after the credit processing are not described. However, the procedures for transferring or sending purchase money to the seller's designated account or location are carried out in accordance with the rules determined by the bank designated by the purchaser.

If the purchaser designates a transfer date, the same-day settlement or a designated-date settlement can be carried out.

By generating individual blocks in an encrypted form, a higher level of security can be achieved.

The credit communication program may include an encryption algorithm unique to each credit institution, so that the level of security can be improved when communicating with the credit-facilitating processing unit 23.

While in the description of the embodiments, the unique information block stores only the total price of the purchased products, other information including the names of the products may be stored and transmitted if privacy is not of concern.

Further, while in the above embodiments, the credit-facilitating processing unit 13, 23 is attached to the existing seller device 10 and credit processing device 20, respectively, for carrying out the credit processing, the credit-facilitating processing units 13, 23 may be constituent parts of these devices when the seller device 10 and the credit processing device 20 are to be newly developed.

However, by attaching the credit-facilitating processing units 13, 23 as separate units, the seller device 10 and the credit processing device 20 can carry out transactions without their selling function and credit function being in direct communication with one another.

Thus, in accordance with the present invention, when engaged in electronic commerce over a network such as the Internet, leakage of personal information necessary for securing credit, such as credit card number, can be prevented. Further, a credit institution can give credit for the price of products purchased from a seller whether or not there is a contractual relationship between the seller and the credit institution.

## Claims

1. A method of processing credit in an electronic commerce system comprising a purchaser terminal device used by a purchaser of products, a seller device managed by a seller of products, and a credit processing device managed by a credit institution, wherein, in response to a request from the purchaser to purchase products displayed on the purchaser terminal device by the seller device over a network, the credit processing device carries out credit processing with regard to the purchaser, wherein a commercial transaction is set up between the purchaser and the seller only when the purchaser satisfies necessary requirements for a transaction, the method comprising:
a first step of transmitting information about a credit institution selected by the purchaser, as well as the information about the desired products, from the purchaser terminal device to the seller device providing the products desired by the purchaser;
a second step of creating, on the seller device, an object comprising information about the purchase price for the desired product and seller ID information identifying the seller device, after receiving the information about the desired product and the information about the credit institution;
a third step of transmitting the object, from the seller device to the purchaser terminal device in which the request for purchasing the products was made;
a fourth step of transmitting the purchaser's personal information about an account in which the payment of the purchase price of the products is to be settled, and the information about the purchase price and the seller ID information in the object received from the seller device, from the purchaser terminal device to the credit processing device of the credit institution selected by the purchaser;
a fifth step of carrying out credit processing based on these items of information, on the credit processing device; and
a sixth step of transmitting the result of the credit processing, from the credit processing device to the seller device identified by the seller ID information.

2. The method of processing credit according to claim 1, wherein the credit processing device carries out credit' processing based on these items of information and transmits the result of the credit processing not including the purchaser's personal information to the seller device identified by the seller ID information.

3. A method of processing credit in an electronic commerce system comprising a purchaser terminal device used by a purchaser of products, a seller device managed by a seller of products, and a credit processing device managed by a credit institution, wherein, in response to a request from the purchaser to purchase products displayed on the purchaser terminal device by the seller device over a network, the credit processing device carries out credit processing with regard to the purchaser, wherein a commercial transaction is set up between the purchaser and the seller only when the purchaser satisfies necessary requirements for a transaction, the method comprising:
a first step of transmitting information about a credit institution selected by the purchaser, as well as the information about the desired products, from the purchaser terminal device to the seller device providing the products desired by the purchaser;
a second step of creating, on the seller device, an object comprising information about the purchase price for the desired product and seller ID information identifying the seller device, after receiving the information about the desired product and the information about the type of credit as well as the credit institution;
a third step of transmitting the object, from the seller device to the purchaser terminal device in which the request for purchasing the products was made;
a fourth step of transmitting the purchaser's personal information about an account in which the payment of the purchase price of the products is to be settled, and the information about the purchase price and the seller ID information in the object received from the seller device, from the purchaser terminal device to the credit processing device of the credit institution selected by the purchaser;
a fifth step of determining if the purchaser is transaction-worthy, on the credit processing device, by comparing the purchase price received from the purchaser terminal device with the maximum payable amount of the purchaser determined by the credit processing device based on the personal information;
a sixth step of transmitting a credit-affirming or denying notice, from the credit processing device to the seller device identified by the seller ID information, depending on the result of the determination; and
a seventh step of transmitting a successful or an unsuccessful transaction notice, from the seller device to the purchaser terminal device, after receiving the credit-affirming or denying notice.

4. The method of processing credit according to claim 1 or 3, wherein the second step comprises the step of creating an object comprising a credit communication program for communicating with the credit function of the credit institution selected by the purchaser, in addition to the information about the purchase price of the desired product and the seller ID information identifying the.seller device,
wherein the fourth step comprises the step of transmitting the information about the purchase price and the seller ID information in the object to the credit processing device of the credit institution selected by the purchaser using the credit communication program.

5. The method of processing credit according to claim 1 or 3, wherein the second step comprises the step of creating an object comprising a credit communication program for communicating with the credit function of the credit institution selected by the purchaser, and information about the recipient of the payment, in addition to the information about the purchase price of the desired product and the seller ID information identifying the seller device,
wherein the fourth step comprises the step of transmitting the information about the purchase price, the seller ID information and the payment-recipient information in the object, to the credit processing device of the credit institution selected by the purchaser using the credit communication program.

6. A method of processing credit in an electronic commerce system comprising a purchaser terminal device used by a purchaser of products, a seller device managed by a seller of products, and a credit processing device managed by a credit institution, wherein, in response to a request from the purchaser to purchase products displayed on the purchaser terminal device by the seller device over a network, the credit processing device carries out credit processing with regard to the purchaser, wherein a commercial transaction is set up between the purchaser and the seller only when the purchaser satisfies necessary requirements for a transaction, the method comprising:
a first step of transmitting information about a credit institution and the type of credit selected by the purchaser, as well as the information about the desired products, from the purchaser terminal device to the seller device providing the products desired by the purchaser;
a second step of creating and storing in a memory means, on the seller device, an object comprising information about the purchase price for the desired product, seller ID information identifying the seller device and transaction ID information for each transaction, after receiving the information about the desired products and the information about the type of credit as well as the credit institution;
a third step of transmitting the object, from the seller device to the purchaser terminal device in which the request for purchasing the products was made;
a fourth step of transmitting the purchaser's personal information about an account in which the payment of the purchase price of the products is to be settled, and the information about the purchase price, the seller ID information and the transaction ID information for each transaction in the object received from the seller device, from the purchaser terminal device to the credit processing device of the credit institution selected by the purchaser;
a fifth step of transmitting the purchaser's personal information about an account in which the payment of the purchase price of the products is to be settled, and the information about the purchase price and the seller ID information in the object received from the seller device, from the purchaser terminal device to the credit processing device of the credit institution selected by the purchaser;
a sixth step of transmitting a credit-affirming or denying notice to which the transaction ID information is attached, from the credit processing device to the seller device identified by the seller ID information, depending on the result of the determination; and
a seventh step of retrieving and confirming, on the seller device, the relevant transaction content from the memory means based on the transaction ID information, after receiving the credit-affirming or denying notice; and
a eighth step of transmitting a successful or an unsuccessful transaction notice, from the seller device to the purchaser terminal device, depending on the result of the confirmation.

7. The method of processing credit according to claim 8, wherein the second step comprises the step of creating an object comprising a credit communication program for communicating with the credit function of the credit institution selected by the purchaser, as well as the information about the purchase price of the desired product, the seller ID information, and the transaction ID information for each transaction,
wherein the fourth step comprises the step of transmitting the information about the purchase price, the seller ID information, and the transaction ID information for each transaction in the object, to the credit processing device of the credit institution selected by the purchaser using the credit communication program.

8. The method of processing credit according to claim 9, wherein the second step comprises the step of creating an object comprising information about the recipient of the purchase price and a credit communication program for communicating with the credit function of the credit institution selected by the purchaser, as well as the information about the purchase price of the desired product, the seller ID information, and the transaction ID information for each transaction,
wherein the fourth step of transmitting the information about the purchase price, the seller ID information, and the transaction ID information for each transaction and the information about the payment recipient in the object, to the credit processing device of the credit institution selected by the purchaser using the credit communication program.

9. An electronic commerce system comprising a purchaser terminal device used by a purchaser of products, a seller device managed by a seller of products, and a credit processing device managed by a credit institution, wherein, in response to a request from the purchaser to purchase products displayed on the purchaser terminal device by the seller device over a network, the credit processing device carries out credit processing with regard to the purchaser, wherein a commercial transaction is set up between the purchaser and the seller only when the purchaser satisfies necessary requirements for a transaction,
wherein the purchaser terminal device comprises:
a first means for transmitting information about a credit institution selected by the purchaser and information about products desired by the purchaser, to the seller device,
a second means for transmitting the purchaser's personal information about an account in which the payment of the purchase price of the products is to be settled, and the information about the purchase price and seller ID information in an object received from the seller device, to the credit processing device of the credit institution selected by the purchaser,
wherein the seller device comprises:
a third means for creating, based on the information about the desired product and the selected credit institution, the object comprising the information about the purchase price and the seller ID information identifying the seller device, and transmitting the object to the purchaser terminal device, and
wherein the credit processing device comprises:
a fourth means for carrying out credit processing concerning the purchaser based on the personal information received from the purchaser terminal device, and transmitting a credit-affirming or denying notice, depending on the result of the credit processing, to the seller device identified by the seller ID information.

10. An electronic commerce system comprising a purchaser terminal device used by a purchaser of products, a seller device managed by a seller of products, and a credit processing device managed by a credit institution, wherein, in response to a request from the purchaser to purchase products displayed on the purchaser terminal device by the seller device over a network, the credit processing device carries out a credit processing with regard to the purchaser, wherein a commercial transaction is set up between the purchaser and the seller only when the purchaser satisfies necessary requirements for a transaction,
wherein the purchaser terminal device comprises:
a first means for transmitting information about a credit institution selected by the purchaser and information about products desired by the purchaser, to the seller device,
a second means for transmitting the purchaser's personal information about an account in which the payment of the purchase price of the products is to be settled, and the information about the purchase price and seller ID information in an object received from the seller device, to the credit processing device of the credit institution selected by the purchaser, wherein the seller device comprises:
a third means for creating, based on the information about the desired product and the selected credit institution received from the purchaser terminal device, the object comprising the information about the purchase price and the seller ID information identifying the seller device, and transmitting the object to the purchaser terminal device; and
a fourth means for receiving a credit-affirming or denying notice from the credit processing device and transmitting a successful or an unsuccessful transaction notice to the purchaser terminal device,
wherein the credit processing device comprises:
a fifth means for determining the maximum payable amount of the purchaser based on the personal information received from the purchaser terminal device, comparing the maximum payable amount with the purchase price received from the purchaser terminal device to determine if the purchaser is transaction-worthy, and transmitting a credit-affirming or denying notice, depending on the result of the determination, to the seller device identified by the seller ID information.

11. The electronic commerce system according to claim 10, wherein the third means comprises that the credit processing device carries out credit processing based on the mentioned items of information and transmits the result of the credit processing not including the purchaser's personal information to the seller device identified by the seller ID information.

12. The electronic commerce system according to claim 10, wherein the third means comprises:
means for creating an object comprising a credit communication program for communicating with the credit function of the credit institution selected by the purchaser, as well as the information about the purchase price of the desired product and the seller ID information identifying the seller device, and wherein the second means comprises:
means for transmitting, by the credit communication program, the information about the purchase price and the seller ID information in the object to the credit processing device of the credit institution selected by the purchaser.

13. An electronic commerce system comprising a purchaser terminal device used by a purchaser of products, a seller device managed by a seller of products, and a credit processing device managed by a credit institution, wherein, in response to a request from the purchaser to purchase products displayed on the purchaser terminal device by the seller device over a network, the credit processing device carries out credit processing with regard to the purchaser, wherein a commercial transaction is established between the purchaser and the seller only when the purchaser satisfies necessary requirements for a transaction,
wherein the purchaser terminal device comprises:
a first means for transmitting information about a credit institution selected by the purchaser and information about products desired by the purchaser, to the seller device,
a second means for transmitting the purchaser's personal information about an account in which the payment of the purchase price of the products is to be settled, and an object received from the seller device, to the credit processing device of the credit institution selected by the purchaser,
wherein the seller device comprises:
a third means for creating, based on the information about the desired product and the selected credit institution received from the purchaser terminal device, the object comprising the information about the purchase price, the seller ID information identifying the seller device, and transaction ID information for each transaction, storing the object in a memory means, and transmitting the object to the purchaser terminal device; and
a fourth means for receiving a credit-affirming or denying notice from'the credit processing device, wherein the credit-affirming or denying notice has the transaction ID information attached thereto, retrieving a transaction content from the memory means based on the received transaction ID information, confirming the transaction content, and transmitting a successful or an unsuccessful transaction notice to the purchaser terminal device,
wherein the credit processing device comprises:
a fifth means for determining the maximum payable amount of the purchaser based on the personal information received from the purchaser terminal device, comparing the maximum payable amount with the purchase price received from the purchaser terminal device to determine if the purchaser is transaction-worthy, and transmitting a credit-affirming or denying notice with the transaction ID information attached thereto, depending on the result of the determination, to the seller device identified by the seller ID information.

14. The electronic commerce system according to claim 13, wherein the third means comprises:
means for creating an object comprising a credit communication program for communicating with the credit function of the credit institution selected by the purchaser, as well as the information about the purchase price of the desired product, the seller ID information identifying the seller device, and the transaction ID information for each transaction, wherein the second means comprises:
means for transmitting, by the credit communication program, the information about the purchase price, the seller ID information, and the transaction ID information for each transaction in the object to the credit processing device of the credit institution selected by the purchaser.

15. The electronic commerce system according to claim 14, wherein the third means comprises:
means for creating an object comprising information about the recipient of the payment for the products and a credit communication program for communicating with the credit function of the credit institution selected by the purchaser, as well as the information about the purchase price of the desired products, the seller ID information identifying the seller device, and the transaction ID information for each transaction; wherein the second means comprises:
means for transmitting, by the credit communication program, the information about the purchase price, the seller ID information, the transaction information for each transaction, and the recipient information in the object to the credit processing device of the credit institution selected by the purchaser.
